# EUROPÄISCHE PATENTSCHRIFT

(11) **EP 3 927 577 B1**
(45) Veröffentlichungstag und Bekanntmachung des Hinweises auf die Patenterteilung: **06.12.2023**
(21) Anmeldenummer: 20700992.9
(22) Anmeldetag: 14.01.2020
(51) Int. Cl.: B60N 2/64

(54) **VERFAHREN ZUM AUSSTATTEN EINER SITZFLÄCHE EINES KRAFTFAHRZEUGSITZES MIT EINER AUSSPARUNG**
METHOD FOR PROVIDING A SEATING SURFACE OF A MOTOR VEHICLE SEAT WITH A RECESS
PROCÉDÉ PERMETTANT D'ÉQUIPER UNE SURFACE D'ASSISE D'UN SIÈGE DE VÉHICULE AUTOMOBILE D'UN ÉVIDEMENT

(30) Priorität: 20.02.2019 DE 102019202295
(43) Veröffentlichungstag der Anmeldung: 29.12.2021
(73) Patentinhaber: PSA Automobiles SA, 78300 Poissy (FR)
(72) Erfinder: KUHLEY, Christian, 65428 Rüsselsheim am Main (DE); MAIER, Jürgen, 65428 Rüsselsheim am Main (DE)
(74) Vertreter: Spitzfaden, Ralf
(86) Internationale Anmeldenummer: PCT/EP2020/050756
(87) Internationale Veröffentlichungsnummer: WO 2020/169270

(56) Entgegenhaltungen:
- WO-A2-2004/089682
- JP-A- 2016 078 581
- US-A1- 2010 187 888

## Beschreibung

Die Erfindung bezieht sich auf einen Kraftfahrzeugsitz, in dessen Sitzfläche eine Aussparung als Druckentlastung für eine sitzende Person vorzusehen ist.

Kraftfahrzeugsitze müssen für eine Nutzung durch einen Insassen gewisse ergonomische Eigenschaften aufweisen, um diesen Insassen generell und für eine längere Zeit in sitzender Position aufnehmen zu können und sollen es ihm erlauben, seine Aufgabe, im Falle eines Fahrzeuges die Aufgabe der Fahrzeugbedienung, ausführen zu können, ohne den menschlichen Körper falsch oder zu hoch zu belasten. Hierzu zählen bspw. geeignete Sitzflächenlängen und -breiten, ein geeigneter Seitenhalt im Sitzkissen und der Lehne, eine geeignete Lehnenhöhe, eine geeignete Schulter- und Lordosestütze, usw. Diese Eigenschaften kann man in der Sitzoberflächengeometrie zusammenfassen, die den menschlichen Körper an vorbestimmten Stellen unterstützen, um eine ergonomische Sitzposition zuzulassen. Das Ziel ist es dabei, den menschlichen Körper in einer möglichst natürlichen Haltung, abgeleitet aus der stehenden Position, im Sitz aufzunehmen.

Bei der gezielten Aufnahme des Insassen in einem Fahrzeugsitz sollte vermieden werden, dass Körperregionen belastet werden, die während einer natürlichen Haltung keiner Belastung ausgesetzt sind. Wie beschrieben ist für den menschlichen Körper die aufrecht stehende Haltung die natürlichste. In dieser Position wird das Steißbein nicht belastet. Die Gewichtskraft des Oberkörpers wird über die die Lendenwirbel, die Hüfte, die Oberschenkelgelenke und schließlich die Beinknochen abgeleitet. Setzt sich der Insasse nun in einen Fahrzeugsitz, so wird ein flächiger Druck auf das Gesäß ausgeübt. Dieser Druck wird auch auf das Steißbein weitergeleitet und schließlich auf die Lendenwirbel übertragen. Dieser Lastpfad entspricht nicht der natürlich vorgesehenen Belastung des Knochenbaus in der Region des Steißbeins, wodurch es über längere Zeit zu Rückenschmerzen, verursacht durch Muskelanspannung, im unteren Lendenwirbelbereich kommen kann. Dieser Belastung wird in herkömmlichen Fahrzeugsitzen keine Rechnung getragen, was ein Problem darstellt.

Die US 2016/0200226 A1, die DE 297 18 922 U1 und die WO 96/11614A1 offenbaren jeweils einen Fahrzeugsitz mit einer Aussparung zur Druckentlastung u.a. des Steißbeins. Die Aussparung reicht jeweils ganz nach hinten, also bis zum äußersten hinteren Rand des Sitzkissens, wo der Scharnierbereich der Rückenlehne ist. Die US 2010/187888 A1 offenbart einen weiteren Fahrzeugsitz mit einer Aussparung aus dem Stand der Technik.

Es ist eine Aufgabe einer Ausführungsform der Erfindung, ein Verfahren für die Ausstattung einer Sitzfläche mit einer Aussparung bereitzustellen, das durch exakte Positionierung dort eine Druckentlastung bietet, wo sie von der sitzenden Person tatsächlich benötigt wird und dabei das Potenzial hat, besonders klein und/oder formschön ausgeführt werden zu können.

Eine weitere Aufgabe kann darin gesehen werden, dass die Druckentlastung für den Steißbeinbereich optimiert ist.

Diese und weitere Aufgaben werden durch den unabhängigen Anspruch gelöst. Vorteilhafte Weiterbildungen ergeben sich mit den abhängigen Ansprüchen.

Gemäß einer Ausführungsform wird ein Verfahren zum Ausstatten einer Sitzfläche eines Kraftfahrzeugsitzes mit einer Aussparung bereitgestellt. Das Verfahren bestimmt die Geometriedaten, also Lage und Ausdehnung der Aussparung, mit den nachfolgenden Schritten. In einem ersten Schritt wird eine Torsolinie T1 und eine sie schneidende Beinlinie B1 festgelegt, die jeweils einem virtuellen Dummy zuordenbar sind. Hierbei definieren Torsolinie T1 und Beinlinie B1 zwei Achsen eines dreidimensionalen Koordinatensystems KS mit einem Ursprung U1 im Schnittpunkt.

In einem zweiten Schritt wird der Ursprung U1 des Koordinatensystems KS oberhalb der Sitzfläche angeordnet. Der zuordenbare Dummy wird insofern virtuell auf der Sitzfläche platziert.

Im dritten Schritt wird die Lage der Aussparung bezogen auf das Koordinatensystem KS gewählt, mit der Maßgabe, dass der Ursprung U1 oberhalb der Aussparung zu liegen kommt. Durch diesen Schritt wird die zu entlastende Körperregion im Bereich des Ursprungs U1 oberhalb der Aussparung platziert, um eine Entlastung zu gewährleisten.

Danach werden die Geometriedaten der Aussparung vom Koordinatensystem KS in das intrinsische Koordinatensystem KS_i des Kraftfahrzeugs transformiert. KS_i ist definiert über eine Torsolinie T_i und eine Beinlinie B_i, die einen auf dem Fahrzeugsitz, insbesondere Fahrer- oder Beifahrersitz, sitzenden virtuellen Dummy charakterisieren. Die von T_i und B_i aufgespannte Ebene ist dabei senkrecht zur dritten Achse von KS_i, die in Fahrzeugquerrichtung verläuft. Bei der Transformation wird der Ursprung U1 zum Ursprung U_i des intrinsischen Koordinatensystems KS_i verschoben und danach die Beinlinie B1 auf B_i und die Torsolinie T1 auf T_i geschwenkt. Durch die Koordinatentransformation wird der Dummy nun virtuell auf den Sitz des Fahrzeugs positioniert und die Lage der Aussparung bezogen auf das reale Fahrzeug bestimmt. Durch den letztgenannten Schritt werden insofern die bezogen auf das intrinsische Koordinatensystem KS_i angegebenen Geometriedaten für die Aussparung der Sitzfläche gewählt.

Mit der oben angegebenen Vorgehensweise lässt sich der druckbelastete Hüftbereich im Bereich U1 bzw. U_i und darüber auch das Steißbein zuverlässig druckentlasten und insbesondere eine lokal begrenzte Druckentlastung schaffen. Dies vermeidet große und unansehnliche Aussparungen in der Sitzfläche, was eine größere Freiheit beim Design der Sitzfläche hinsichtlich Größe und/oder Form der Aussparung mit sich bringt, was die Akzeptanz beim Kunden fördert.

Das Verfahren wird mit einem Computerprogramm und insofern virtuell durchgeführt. Hierfür gibt es diverse kommerzielle Produkte auf dem Markt wie bspw. das 3D-CAD-Menschmodell RAMSIS der Firma Human Solutions GmbH (DE), mit der die ergonomisch relevanten Körperabmessungen von Frauen, Männern und Kindern hinsichtlich einer sehr kleinen und sehr großen Körperlänge wiedergegeben werden können.

In einer zweiten Ausführungsform wird der Ursprung U_i des intrinsischen Koordinatensystems KS_i auf den H-Punkt (englisch: hip point) oder den R-Punkt (der Sitzreferenzpunkt; englisch: seat reference point) des Kraftfahrzeugs gelegt. H-Punkt und R-Punkt sind bekannte Referenzpunkte, die von Automobilherstellern individuell für jedes Kraftfahrzeugmodell bestimmt werden. Wird wie vorgeschlagen der Ursprung U_i auf den H-Punkt gelegt, so kommt durch diese Wahl der H-Punkt über der Aussparung zu liegen, wird also der ergonomisch bestimmte Hüftbereich gezielt druckentlastet. Die Druckentlastung ist damit passgenau bzw. lokal dort gegeben, wo sie benötigt wird, so dass sie kleiner ausfallen kann.

Bei einer weiteren Ausführungsform wird die Erstreckung der Aussparung entlang der Beinlinie B1 für eine Druckentlastung des Steißbeins optimiert. Dies erfolgt unter Zuhilfenahme des Punkts S, der die Lage des Steißbeins im Koordinatensystem KS angibt. Die Lage des Steißbeins bzw. des Punkts S liefert die verwendete Berechnungssoftware als Bestandteil des 3D-CAD-Menschmodells. Die Länge der Aussparung ausgehend vom Punkt S beträgt in Blickrichtung entlang der Beinlinie B1 gemessen ca. 30 mm bis ca. 130 mm. Die Breite dieses Intervalls ergibt sich aus dem Umstand, dass in der Praxis die Sitzpositionen der Fahrenden u.a. wegen ihrer Körpergröße variieren und sie zudem während der Fahrt etwas nach vorne und hinten rutschen. Die Intervallbreite ist so gewählt, dass möglichst alle Fahrenden einen ergonomischen Vorteil haben. Das kommt zustande, da jede Person, egal welchem Perzentil entsprechend, zuerst den Sitz in der Längseinstellung auf ihre individuelle Köpergröße einstellen kann. Dadurch ist die Streuung der unterschiedlichen Sitzpositionen relativ zum Sitzkissen sehr klein. Diese Streuung wird durch das Intervall abgedeckt.

Bei einer hierzu alternativen Ausführungsform, die ebenfalls für die Entlastung des Steißbeins optimiert ist, wird die Erstreckung der Aussparung entlang der Beinlinie mit Hilfe zweiter Punkte E1 und E2 im Koordinatensystem KS festgelegt. Die Punkte E1 und E2 sind dadurch definiert, dass sie die Endpunkte eines vom obigen Punkt S aus geschlagenen Kreisbogens mit vorgebbarem Radius r sind, wobei eine Verbindungslinie L vom Punkt S zur Mitte des Kreisbogens senkrecht auf der Sitzfläche steht. Der Punkt S gibt also erneut die Lage des Steißbeins wieder. Hier lege man fest, dass E1 weiter in Blickrichtung gelegen sei als E2, sodass bei einer Koordinatentransformation in KS_i der Punkt E1 im Fahrzeug weiter vorne zu liegen kommt als E2. Mit dieser Definition ist die Erstreckung der Aussparung ausgehend vom Punkt E1 in Blickrichtung entlang der Beinlinie maximal 100 mm und entgegengesetzt hierzu, also entgegengesetzt zur Blickrichtung, maximal bis zum Punkt E2. Diese Ausführungsform hat die gleichen Vorteile wie die Ausführungsform des letzten Absatzes.

Bei einer weiteren, die beiden vorgenannten Ausführungsformen konkretisierenden Variante ist der Punkt S die Steißbeinspitze des Dummys. Damit wird die Druckentlastung gezielt für die Steißbeinspitze berechnet
Bei einer weiteren Ausführungsform wird als minimale Tiefe der Aussparung 20 mm gewählt. Bei einer geringeren Tiefe gibt es weitgehend keine Druckentlastung mehr.

Weiter kann für die Aussparung in Blickrichtung des Dummys gesehen ein rampenförmiger Verlauf nach oben gewählt werden. Dadurch lassen sich in der Aussparung ansammelnde Schmutzpartikel bzw. Krümel leichter entfernen und fällt die Herstellung der Aussparung leichter.

Weiterhin kann eine Aussparung gewählt werden, die entgegengesetzt zur Blickrichtung gesehen geschlossen ausgeführt ist. Dies vermeidet unangenehme Zugluft im Bereich der unteren Wirbelsäule.

Bei einer weiteren Ausführungsform wird eine Aussparung mit geradlinigen Kanten gewählt, d.h. mit geradlinigen Kanten in der Sitzflächenebene. Damit lässt sich die Aussparung leichter innenseitig mit einem Sitzbezug auskleiden.

Nachfolgend soll die Erfindung anhand von Figuren näher erläutert werden. Hierbei zeigen:
- Fig. 1: auszugsweise ein 3D-CAD-Menschmodell,
- Fig. 2: einen Fahrzeugsitz.

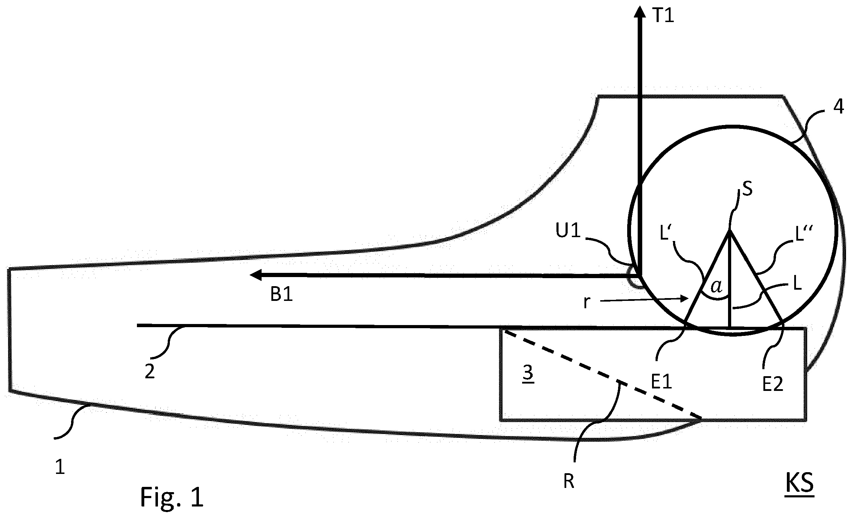

Fig. 1 zeigt auszugsweise ein 3D-CAD-Menschmodell 1 in einer von einer Torsolinie T1 und einer Beinlinie B1 aufgespannten Ebene, die zusammen mit der hierzu senkrechten, in die Zeichenebene hineinragenden dritten Achse ein Koordinatensystem KS aufspannen. Beinlinie B1 und Torsolinie T1 schneiden sich im Ursprung U1. Der Pfeil der Beinlinie B1 zeigt die Blickrichtung des 3D-CAD-Menschmodells 1 an, wenn es auf der Sitzfläche 2 sitzt.

Die Sitzfläche 2 hat eine Aussparung 3. Zur Positionierung wird zunächst die Aussparung 3 unterhalb des Ursprungs U1 angeordnet. Zur exakten Positionierung wird der Punkt S der Steißbeinspitze festgelegt und um den Punkt S ein Kreis mit Radius r geschlagen, der durch U1 geht. Der Radius r kann um 100 mm groß sein. Ein Kreisbogen 4 schneidet die Sitzfläche 2 in zwei Endpunkten E1 und E2 und wird von einer senkrecht zur Sitzfläche 2 verlaufenden Verbindungslinie L symmetrisch geteilt. Der Punkt E1 ergibt sich insofern auch durch Verschwenken der Verbindungslinie L um einen Winkel *a* in L', korrespondierend hierzu ergibt sich E2 durch Verschwenken der Verbindungslinie L um einen Winkel -*a* in L".

Ausgehend hiervon erstreckt sich die Aussparung 3 ausgehend vom Punkt E1 in Richtung der Beinlinie B1 max. 100 mm weit und in entgegengesetzte Richtung bis zu E2. Die Tiefe der Aussparung 3 ist ca. 30 mm.

Die Erstreckung der Aussparung senkrecht zur Figurenebene beträgt 60 mm. Dies ermöglicht, dass eine sitzende Person mit den beiden Sitzhöckern abgestützt ist aber das Steißbein durch die Aussparung 3 druckentlastet wird. In die Aussparung 3 kann, wie es die gestrichelte Linie R andeutet, eine Rampe eingearbeitet sein, was die Entfernung von Krümeln in der Aussparung erleichtert, wenn der Sitzbezug die Aussparung von innen auskleidet.

Nach Festlegen der Geometriedaten der Aussparung 3 im Koordinatensystem KS erfolgt eine Koordinatentransformation in das intrinsische Koordinatensystem KS_i des jeweiligen Fahrzeugs. Hierzu wird U1 auf U_i gelegt, B1 auf B_i sowie T1 auf T_i geschwenkt.

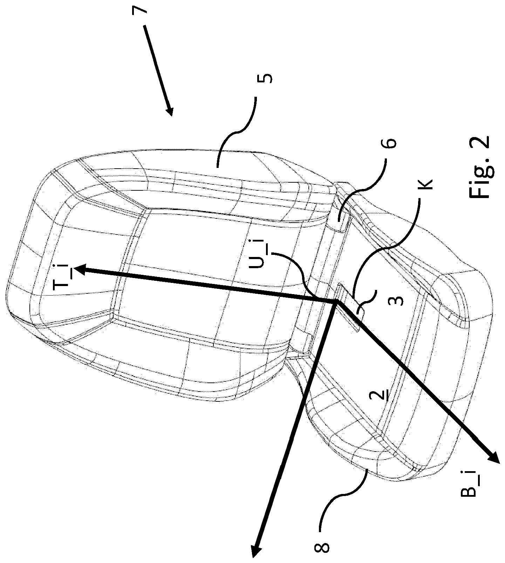

Figur 2 zeigt den fertigen Kraftfahrzeugsitz 7 mit seinem Sitzteil 5 und seiner Rückenlehne 5. Die Aussparung 3 ist recht klein, mit geradlinigen Kanten K ausgeführt und nach hinten hin, also zum Bereich des Scharniers 6 hin, geschlossen ausgeführt, um Zugluft zu vermeiden.

## Patentansprüche

1. Verfahren zum Ausstatten einer Sitzfläche (2) eines Kraftfahrzeugsitzes (4) eines Kraftfahrzeugs mit einer Aussparung (3), deren Geometriedaten mit den folgenden Schritten bestimmt werden:
a) Festlegen einer Torsolinie T1 und einer sie schneidenden Beinlinie B1, die jeweils einem virtuellen Dummy zuordenbar sind, wobei Torsolinie T1 und Beinlinie B1 ein Koordinatensystem KS mit einem Ursprung U1 definieren,
b) Anordnen des Ursprungs U1 des Koordinatensystems KS oberhalb der Sitzfläche (2),
c) Wählen von bezogen auf das Koordinatensystem KS definierten Geometriedaten der Aussparung (3) mit der Maßgabe, dass der Ursprung U1 oberhalb der Aussparung (3) zu liegen kommt,
d) Transformieren der Geometriedaten der Aussparung (3) vom Koordinatensystem KS in das intrinsische Koordinatensystem des Kraftfahrzeugs.

2. Verfahren nach Anspruch 1, bei dem der Ursprung U_i des intrinsischen Koordinatensystems auf den Hüftpunkt oder den Sitzreferenzpunkt des Kraftfahrzeugs gelegt wird.

3. Verfahren nach Anspruch 1, bei dem bei Schritt c) die Erstreckung der Aussparung in Richtung der Beinlinie wie folgt festgelegt wird:
a) Festlegen eines Punkts S, der der Lage des Steißbeins des Dummys entspricht,
b) Festlegen, dass die Erstreckung der Aussparung (3) ausgehend vom Punkt S und in Blickrichtung entlang der Beinlinie B1 gemessen ca. 30 mm bis ca. 130 mm ist.

4. Verfahren nach Anspruch 1, bei dem bei Schritt c) die Erstreckung der Aussparung (3) in Richtung der Beinlinie B1 dadurch festgelegt wird, dass sich die Aussparung (3) ausgehend von einem Punkt E1 in Blickrichtung entlang der Beinlinie B1 betrachtet maximal 100 mm erstreckt und entgegengesetzt hierzu maximal bis zu einem Punkt E2, wobei die Punkte E1 und E2 dadurch definiert sind, dass sie die Schnittpunkte eines vom Punkt S aus geschlagenen Kreisbogens mit vorgebbarem Radius r mit der Sitzfläche (2) sind, wobei der Kreisbogen von einer senkrecht zur Sitzfläche verlaufenden Verbindungslinie L symmetrisch geteilt wird.

5. Verfahren nach Anspruch 3 oder 4, bei dem als Punkt S die Steißbeinspitze gewählt wird.

6. Verfahren nach Anspruch 1, bei dem bei Schritt c) für die Aussparung in Blickrichtung des Dummys gesehen ein rampenförmiger Verlauf nach oben gewählt wird.

7. Verfahren nach Anspruch 1, bei dem eine Aussparung gewählt wird, die entgegengesetzt zur Blickrichtung geschlossen ausgeführt ist.

8. Verfahren nach einem der vorherigen Ansprüche, bei dem eine Aussparung gewählt wird, deren Erstreckung senkrecht zu Beinlinie B1 und Torsolinie T1 zwischen 10 mm und 140 mm ist, bevorzugt zwischen ca. 30 mm und ca. 75 mm und besonders bevorzugt zwischen ca. 45 mm und ca. 65 mm.

9. Verfahren nach einem der vorherigen Ansprüche, bei dem eine Aussparung mit geradlinigen Kanten K gewählt wird

## Claims

1. Method for equipping a seat surface (2) of a motor vehicle seat (4) of a motor vehicle with a recess (3), the geometry data of which is determined using the following steps:
a) determining a torso line T1 and a leg line B1 intersecting it, each of which can be assigned to a virtual dummy, with torso line T1 and leg line B1 defining a coordinate system KS with an origin U1,
b) arranging the origin U1 of the coordinate system KS above the seat (2),
c) selecting geometry data for the recess (3) defined in relation to the coordinate system KS, with the proviso that the origin U1 lies above the recess (3),
d) transforming the geometry data of the recess (3) from the coordinate system KS into the intrinsic coordinate system of the motor vehicle.

2. The method according to claim 1, in which the origin U_i of the intrinsic coordinate system is placed on the hip point or the seat reference point of the motor vehicle.

3. The method according to claim 1, in which in step c) the extent of the recess in the direction of the leg line is determined as follows:
a) determining a point S that corresponds to the position of the dummy's tailbone,
b) Determine that the extent of the recess (3), starting from point S and measured along the leg line B1, is approx. 30 mm to approx. 130 mm.

4. The method according to claim 1, in which in step c) the extension of the recess (3) in the direction of the leg line B1 is determined in that the recess (3), starting from a point E1 in the viewing direction along the leg line B1, is a maximum of 100 mm and in the opposite direction to a maximum of a point E2, the points E1 and E2 being defined by the fact that they are the intersection points of a circular arc with a predeterminable radius r drawn from the point S with the seat surface (2), the circular arc being one The connecting line L running perpendicular to the seat is divided symmetrically.

5. The method according to claim 3 or 4, in which the tip of the coccyx is selected as point S.

6. The method according to claim 1, in which in step c) an upward ramp-shaped course is selected for the recess as seen in the direction of view of the dummy.

7. The method according to claim 1, in which a recess is selected which is designed to be closed in the opposite direction to the viewing direction.

8. Method according to one of the preceding claims, in which a recess is selected whose extension perpendicular to the leg line B1 and torso line T1 is between 10 mm and 140 mm, preferably between approximately 30 mm and approximately 75 mm and particularly preferably between approximately. 45 mm and approx. 65 mm.

9. Method according to one of the preceding claims, in which a recess with straight edges K is selected

## Revendications

1. Procédé pour équiper une surface d'assise (2) d'un siège (4) de véhicule automobile d'un évidement (3) dont les données géométriques sont déterminées selon les étapes suivantes :
a) déterminer une ligne de torse T1 et une ligne de jambe B1 la coupant, chacune pouvant être attribuée à un mannequin virtuel, la ligne de torse T1 et la ligne de jambe B1 définissant un système de coordonnées KS d'origine U1,
b) disposer l'origine U1 du système de coordonnées KS au-dessus du siège (2),
c) sélectionner des données géométriques pour l'évidement (3) définies par rapport au système de coordonnées KS, à condition que l'origine U1 se trouve au-dessus de l'évidement (3),
d) transformer les données géométriques de l'évidement (3) du système de coordonnées KS dans le système de coordonnées intrinsèque du véhicule automobile.

2. Procédé selon la revendication 1, dans lequel l'origine U_i du repère intrinsèque est placée sur le point hanche ou le point de référence siège du véhicule automobile.

3. Procédé selon la revendication 1, dans lequel à l'étape c) l'étendue de l'évidement en direction de la ligne des jambes est déterminée comme suit :
a) déterminer un point S qui correspond à la position du coccyx du mannequin,
b) Déterminez que l'étendue de l'évidement (3), à partir du point S et mesurée le long de la ligne de jambe B1, est d'environ 30 mm à environ 130 mm.

4. Procédé selon la revendication 1, dans lequel à l'étape c) l'extension de l'évidement (3) en direction de la ligne de jambe B1 est déterminée en ce que l'évidement (3), à partir d'un point E1 dans la direction de visualisation le long de la ligne de jambe B1, est au maximum de 100 mm et en sens inverse jusqu'au maximum d'un point E2, les points E1 et E2 étant définis par le fait qu'ils sont les points d'intersection d'un arc de cercle de rayon r prédéterminé tiré du point S avec la surface d'assise (2), l'arc de cercle étant un. La ligne de liaison L perpendiculaire au siège est divisée symétriquement.

5. Procédé selon la revendication 3 ou 4, dans lequel la pointe du coccyx est choisie comme point S.

6. Procédé selon la revendication 1, dans lequel à l'étape c) on sélectionne pour l'évidement un parcours en forme de rampe ascendante vu dans la direction de vue du mannequin.

7. Procédé selon la revendication 1, dans lequel on choisit un évidement conçu pour être fermé dans la direction opposée à la direction de visualisation.

8. Procédé selon l'une des revendications précédentes, dans lequel on choisit un évidement dont l'extension perpendiculaire à la ligne de jambe B1 et à la ligne de torse T1 est comprise entre 10 mm et 140 mm, de préférence entre environ 30 mm et environ 75 mm et de manière particulièrement préférée entre environ 45 mm et environ 65 mm.

9. Procédé selon l'une des revendications précédentes, dans lequel on sélectionne un évidement à bords droits K
